(19) Europäisches Patentamt
European Patent Office
Office européen des brevets

(11) **EP 4 668 870 A1**

(12) **EUROPEAN PATENT APPLICATION**
published in accordance with Art. 153(4) EPC

(43) Date of publication:
**24.12.2025 Bulletin 2025/52**

(51) International Patent Classification (IPC):
*H04W 48/12* (2009.01)    *H04W 56/00* (2009.01)
*H04W 48/10* (2009.01)    *H04W 72/04* (2023.01)

(21) Application number: 24737853.2

(52) Cooperative Patent Classification (CPC):
H04W 48/10; H04W 48/12; H04W 56/00;
H04W 72/04

(22) Date of filing: 16.02.2024

(86) International application number:
PCT/KR2024/095332

(87) International publication number:
WO 2024/172616 (22.08.2024 Gazette 2024/34)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 16.02.2023 US 202363446311 P

(71) Applicant: **LG Electronics Inc.**
**Seoul 07336 (KR)**

(72) Inventors:
• **KIM, Jaehyung**
**Seoul 06772 (KR)**
• **YANG, Suckchel**
**Seoul 06772 (KR)**
• **AHN, Seungjin**
**Seoul 06772 (KR)**

(74) Representative: **Maikowski & Ninnemann
Patentanwälte Partnerschaft mbB
Postfach 15 09 20
10671 Berlin (DE)**

(54) **APPARATUS AND METHOD FOR TRANSMITTING AND RECEIVING PBCH FOR NARROWBAND WIRELESS COMMUNICATION IN WIRELESS COMMUNICATION SYSTEM**

(57) There is provided a method of operating a user equipment (UE) in a wireless communication system. The method comprises determining a physical broadcast channel (PBCH) resource block (RB) subset of RBs for a reception of a PBCH within a channel bandwidth less than 5 MHz, the PBCH RB subset including first RBs for a primary synchronization signal (PSS) and a secondary synchronization signal (SSS); and receiving, from a base station (BS), a physical downlink control channel (PDCCH) within the PBCH RB subset based on the PBCH RB subset being assumed as an initial downlink (DL) bandwidth part (BWP).

[FIG. 7]

**Description**

[Technical Field]

The present disclosure relates to a wireless communication system. More particularly, the present disclosure relates to a device and method for transmitting and receiving a PBCH for narrowband wireless communication in a wireless communication system.

[Background Art]

In order to efficiently support various use cases (e.g., IoT, wearable, etc.) in 5G in terms of cost/complexity, types of terminals with reduced cost/complexity are being introduced. Newly introduced types of terminals may reduce their maximum supported bandwidth and may not be able to receive all SSBs.
There is a demand from operators to apply the 5G NR system to mobile communication for railway, utility/infrastructure network, public safety, etc. using the existing narrowband spectrum (< 5 MHz). Reflecting these requirements, standardization work is underway in Rel-18 to support bandwidths (e.g., -3 MHz) less than 5 MHz in the NR system.

[Disclosure]

[Technical Problem]

In order to solve the above-described and other problems, the present disclosure provides a device and method for transmitting and receiving a PBCH for narrowband wireless communication in a wireless communication system.
The present disclosure provides a device and method for contributing to the expansion of application use cases of the NR system by solving problems that may occur when supporting narrowband terminal/spectrum scenarios in a wireless communication system.
The technical objects to be achieved by the present disclosure are not limited to those that have been described hereinabove merely by way of example, and other technical objects that are not mentioned can be clearly understood by those skilled in the art, to which the present disclosure pertains, from the following descriptions.

[Technical Solution]

According to various embodiments of the present disclosure, there is provided a method of operating a user equipment (UE) in a wireless communication system, the method comprising determining a physical broadcast channel (PBCH) resource block (RB) subset of RBs for a reception of a PBCH within a channel bandwidth less than 5 MHz, the PBCH RB subset including first RBs for a primary synchronization signal (PSS) and a secondary synchronization signal (SSS); and receiving, from a base station (BS), a physical downlink control channel (PDCCH) within the PBCH RB subset based on the PBCH RB subset being assumed as an initial downlink (DL) bandwidth part (BWP).
According to various embodiments of the present disclosure, there is provided a method of operating a base station (BS) in a wireless communication system, the method comprising determining a physical broadcast channel (PBCH) resource block (RB) subset of RBs for a reception of a PBCH within a channel bandwidth less than 5 MHz, the PBCH RB subset including first RBs for a primary synchronization signal (PSS) and a secondary synchronization signal (SSS); and transmitting, to a user equipment (UE), a physical downlink control channel (PDCCH) within the PBCH RB subset based on the PBCH RB subset being assumed as an initial downlink (DL) bandwidth part (BWP).
According to various embodiments of the present disclosure, there is provided a user equipment (UE) in a wireless communication system, the UE comprising a transceiver, at least one processor, and at least one memory operably connectable to the at least one processor, wherein the at least one memory is configured to store instructions performing operations based on being executed by the at least one processor, and wherein the operations comprise all steps of a method of operating the UE according to various embodiments of the present disclosure.
According to various embodiments of the present disclosure, there is provided a base station (BS) in a wireless communication system, the BS comprising a transceiver, at least one processor, and at least one memory operably connectable to the at least one processor, wherein the at least one memory is configured to store instructions performing operations based on being executed by the at least one processor, and wherein the operations comprise all steps of a method of operating the BS according to various embodiments of the present disclosure.
According to various embodiments of the present disclosure, there is provided a control device controlling a user equipment (UE) in a wireless communication system, the control device comprising at least one processor and at least one memory operably connectable to the at least one processor, wherein the at least one memory is configured to store instructions performing operations based on being executed by the at least one processor, and wherein the operations comprise all steps of a method of operating the UE according to various embodiments of the present disclosure.

According to various embodiments of the present disclosure, there is provided a control device controlling a base station (BS) in a wireless communication system, the control device comprising at least one processor and at least one memory operably connectable to the at least one processor, wherein the at least one memory is configured to store instructions performing operations based on being executed by the at least one processor, and wherein the operations comprise all steps of a method of operating the BS according to various embodiments of the present disclosure.

According to various embodiments of the present disclosure, there are provided one or more non-transitory computer readable mediums storing one or more instructions, wherein the one or more instructions are configured to perform operations based on being executed by one or more processors, and wherein the operations comprise all steps of a method of operating the UE according to various embodiments of the present disclosure.

According to various embodiments of the present disclosure, there are provided one or more non-transitory computer readable mediums storing one or more instructions, wherein the one or more instructions are configured to perform operations based on being executed by one or more processors, and wherein the operations comprise all steps of a method of operating the BS according to various embodiments of the present disclosure.

[Advantageous Effects]

In order to solve the above-described and other problems, the present disclosure can provide a device and method for transmitting and receiving a PBCH for narrowband wireless communication in a wireless communication system.

The present disclosure can provide a device and method for contributing to the expansion of application use cases of the NR system by solving problems that may occur when supporting narrowband terminal/spectrum scenarios in a wireless communication system.

[Description of Drawings]

The accompanying drawings, which are included to provide a further understanding of the present disclosure and constitute a part of the detailed description, illustrate embodiments of the present disclosure and serve to explain technical features of the present disclosure together with the description. Technical features of the present disclosure are not limited to specific drawings, and features disclosed in each drawing can be combined with each other to form a new embodiment. Reference numerals in each drawing may denote structural elements.

FIG. 1 illustrates physical channels used in a system applicable to the present disclosure and an example of a general signal transmission method using the physical channels.

FIG. 2 illustrates an example of a radio frame structure used in a system applicable to the present disclosure.

FIG. 3 illustrates an example of a slot structure used in a system applicable to the present disclosure.

FIG. 4 illustrates an example of a slot structure of a radio frame used in a system applicable to the present disclosure.

FIG. 5 illustrates an example of a process for a UE to receive DL signals/channels in an initial access procedure in a system applicable to the present disclosure.

FIG. 6 illustrates an example of a time/frequency structure of a synchronization signal block (SSB) in a system applicable to the present disclosure.

FIG. 7 illustrates an example of RB subset configuration for PBCH transmission in a system applicable to the present disclosure.

FIG. 8 illustrates an example of RB subset configuration for PBCH transmission in a system applicable to the present disclosure.

FIG. 9 illustrates an example of RB subset configuration for PBCH transmission in a system applicable to the present disclosure.

FIG. 10 illustrates an example of RB subset configuration for PBCH transmission in a system applicable to the present disclosure.

FIG. 11 illustrates an example of PDCCH transmission/reception frequency domain in a system applicable to the present disclosure.

FIG. 12 illustrates an example of an operation process of a UE in a system applicable to the present disclosure.

FIG. 13 illustrates an example of an operation process of a base station in a system applicable to the present disclosure.

FIG. 14 illustrates an example of a structure of a first device and a second device in a system applicable to the present disclosure.

[Mode for Invention]

In various embodiments of the present disclosure, "A or B" may mean "only A," "only B" or "both A and B." In other words, in various embodiments of the present disclosure, "A or B" may be interpreted as "A and/or B." For example, in various embodiments of the present disclosure, "A, B or C" may mean "only A," "only B," "only C" or "any combination of A, B and C."

A slash (/) or comma used in various embodiments of the present disclosure may mean "and/or." For example, "A/B" may mean "A and/or B." Hence, "A/B" may mean "only A," "only B" or "both A and B." For example, "A, B, C" may mean "A, B, or C."

In various embodiments of the present disclosure, "at least one of A and B" may mean "only A," "only B" or "both A and B." In addition, in various embodiments of the present disclosure, the expression of "at least one of A or B" or "at least one of A and/or B" may be interpreted in the same meaning as "at least one of A and B."

Further, in various embodiments of the present disclosure, "at least one of A, B, and C" may mean "only A," "only B," "only C" or "any combination of A, B and C." In addition, "at least one of A, B or C" or "at least one of A, B and/or C" may mean "at least one of A, B, and C."

Further, parentheses used in various embodiments of the present disclosure may mean "for example." Specifically, when "control information (PDCCH)" is described, "PDCCH" may be proposed as an example of "control information." In other words, "control information" in various embodiments of the present disclosure is not limited to "PDCCH," and "PDDCH" may be proposed as an example of "control information." In addition, even when "control information (i.e., PDCCH)" is described, "PDCCH" may be proposed as an example of "control information."

Technical features described individually in one drawing in various embodiments of the present disclosure may be implemented individually or simultaneously.

**General Signal Transmission Method in 3GPP**

**Physical Channels and General Signal Transmission**

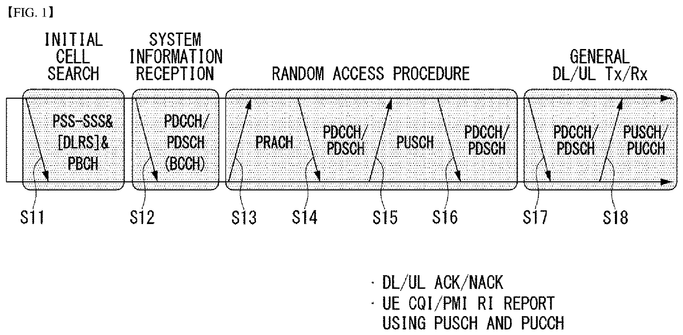

FIG. 1 illustrates physical channels used in a system applicable to the present disclosure and an example of a general signal transmission method using the physical channels. More specifically, FIG. 1 illustrates physical channels used in the 3GPP system and a general signal transmission.

FIG. 1 illustrates physical channels used in the 3GPP system and a general signal transmission. In a wireless communication system, the UE receives information from the eNB through Downlink (DL) and the UE transmits information from the eNB through Uplink (UL). The information which the eNB and the UE transmit and receive includes data and various control information and there are various physical channels according to a type/use of the information which the eNB and the UE transmit and receive.

A UE that is powered on again while being powered off or enters a new cell performs an initial cell search operation such as synchronizing with a base station (BS) (S11). To this end, the UE receives a primary synchronization channel (PSCH) and a secondary synchronization channel (SSCH) from the base station to synchronize with the base station and acquires information such as a cell identity (ID), etc. Further, the UE may receive a physical broadcast channel (PBCH) from the base station and acquire in-cell broadcast information. The UE may receive a downlink reference signal (DL RS) in an initial cell search step to check a downlink channel state.

The UE that completes the initial cell search may receive a physical downlink control channel (PDCCH) and a physical downlink shared channel (PDSCH) corresponding to the PDCCH to acquire more detailed system information (S12).

Next, the UE may perform a random access procedure in order to complete an access to the base station (S13 to S16). Specifically, the UE may transmit a preamble on a physical random access channel (PRACH) (S13) and receive a random access response (RAR) for the preamble on the PDCCH and the PDSCH corresponding to the PDCCH (S14).

Thereafter, the UE may transmit a physical uplink shared channel (PUSCH) using scheduling information within the RAR (S15) and perform a contention resolution procedure such as the PDCCH and the PDSCH corresponding to the PDCCH (S16).

Next, the UE that performs the above-described procedure may perform PDCCH/PDSCH reception (S17) and PUSCH/physical uplink control channel (PUCCH) transmission (S18), as a general uplink/downlink signal transmission procedure. Control information that the UE transmits to the base station is referred to as uplink control information (UCI). The UCI includes hybrid automatic repeat and request (HARQ) acknowledgement/negative ACK (ACK/NACK), scheduling request (SR), channel state information (CSI), etc. The CSI includes a channel quality indication (CQI), a precoding matrix indicator (PMI), a rank indicator (RI), etc. The UCI is generally transmitted on the PUCCH, but if control information and data need to be transmitted at the same time, the UCI may be transmitted on the PUSCH. The UE may aperiodically transmit the UCI on the PUSCH based on a request/indication of the network.

## Orthogonal Frequency Division Multiplexing (OFDM) Numerology

A new RAT system uses an OFDM transmission scheme or a similar transmission scheme thereto. The new RAT system may follow different OFDM parameters from OFDM parameters of LTE. Alternatively, the new RAT system may follow numerology of existing LTE/LTE-A as it is but have a larger system bandwidth (e.g., 100 MHz). Alternatively, one cell may support a plurality of numerologies. In other words, UEs that operate with different numerologies may coexist in one cell.

## Radio Frame Structure

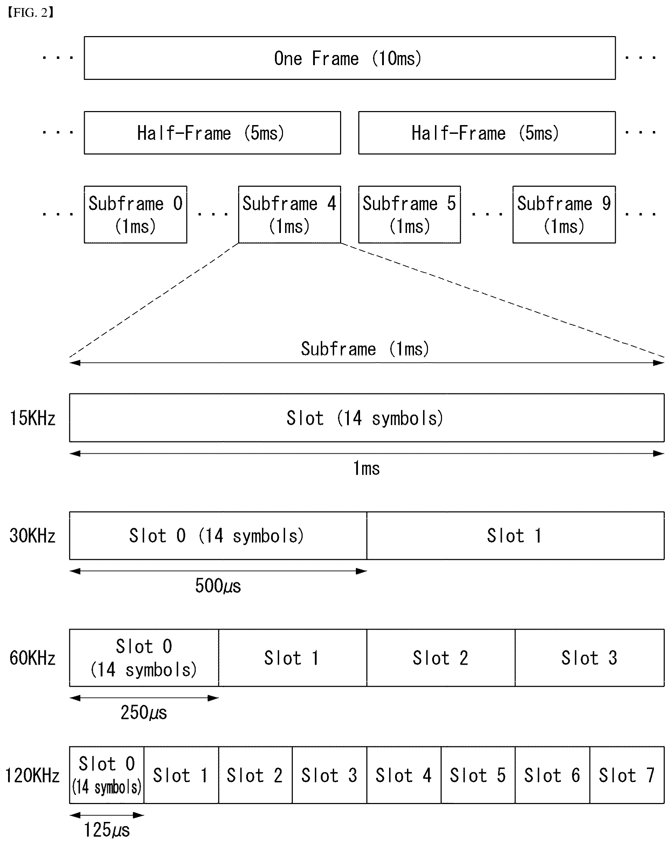

FIG. 2 illustrates an example of a radio frame structure used in a system applicable to the present disclosure.
In NR, uplink and downlink transmission consists of frames. A radio frame has a length of 10 ms and is defined as two 5 ms half-frames (HFs). The half-frame is defined as five 1 ms subframes (SFs). The subframe is split into one or more slots, and the number of slots in the subframe depends on a subcarrier spacing (SCS). Each slot includes 12 or 14 OFDM(A) symbols depending on a cyclic prefix (CP). When a normal CP is used, each slot includes 14 symbols. When an extended CP is used, each slot includes 12 symbols. The symbol may include an OFDM symbol (or CP-OFDM symbol) and an SC-FDMA symbol (or DFT-s-OFDM symbol).
Table 1 shows that when the normal CP is used, the number of symbols per slot, the number of slots per frame, and the number of slots per subframe vary depending on the SCS.

[Table 1]

| SCS ($15*2^u$) | $N^{slot}_{symb}$ | $N^{frame,u}_{slot}$ | $N^{subframe.u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

$N^{slot}_{symb}$ is the number of symbols in the slot. $N^{frame,u}_{slot}$ is the number of slots in the frame. $N^{subframe,u}_{slot}$ is the number of slots in the subframe.
Table 2 shows that when the extended CP is used, the number of symbols per slot, the number of slots per frame, and the number of slots per subframe vary depending on the SCS.

[Table 2]

| SCS ($15*2^u$) | $N^{slot}_{symb}$ | $N^{frame,u}_{slot}$ | $N^{subframe,u}_{slot}$ |
|---|---|---|---|
| 60KHz (u=2) | 12 | 40 | 4 |

The NR supports multiple numerologies (or subcarrier spacing (SCS)) for supporting various 5G services. For example, when the SCS is 15 kHz, a wide area in traditional cellular bands is supported and when the SCS is 30 kHz/60 kHz, dense-urban, lower latency, and wider carrier bandwidth are supported, and when the SCS is more than 60 kHz, a bandwidth larger than 24.25 GHz is supported in order to overcome phase noise.

An NR frequency band may be defined as two types of frequency ranges (FR1 and FR2). Values of the frequency ranges may be changed, and, for example, the two types of frequency ranges (FR1 and FR2) may be as shown in Table 3 below. For convenience of description, among frequency ranges used in an NR system, FR1 may denote "sub 6GHz range", and FR2 may denote "above 6GHz range" and may be referred to as millimeter wave (mmW).

[Table 3]

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, FR1 may include a frequency band from 410 MHz to 7125 MHz, as shown in Table 4 below. That is, FR1 may include a frequency band of 6 GHz (or 5850, 5900, 5925 MHz, etc.) or higher. For example, the frequency band of 6 GHz (or 5850, 5900, 5925 MHz, etc.) or higher included in FR1 mat include an unlicensed band. The unlicensed band may be used for diverse purposes, for example, used for communication for vehicles (e.g., self-driving).

[Table 4]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

In the NR system, OFDM(A) numerology (e.g., SCS, CP length, etc.) may be differently configured between a plurality of cells merged into one UE. Hence, an (absolute time) duration of a time resource (e.g., SF, slot or TTI) (for convenience, collectively referred to as a time unit (TU)) consisting of the same number of symbols may be configured differently between the merged cells.

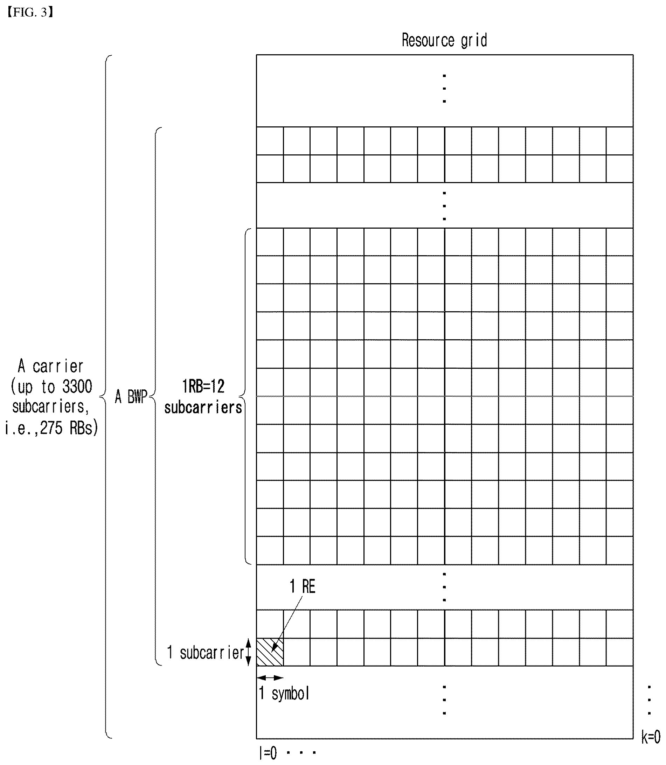

FIG. 3 illustrates an example of a slot structure used in a system applicable to the present disclosure.

A slot includes a plurality of symbols in a time domain. For example, one slot includes 7 symbols in a normal CP, while one slot includes 6 symbols in an extended CP. A carrier includes a plurality of subcarriers in a frequency domain. A resource block (RB) is defined as a plurality of (e.g., 12) consecutive subcarriers in the frequency domain. A bandwidth part (BWP) is defined as a plurality of consecutive (P)RBs in the frequency domain and may correspond to one numerology (e.g., SCS, CP length, etc.). The carrier may include up to N (e.g., 5) BWPs. The data communication may be performed through an activated BWP, and only one BWP may be activated in one UE. In a resource grid, each element is referred to as a resource element (RE), and one complex symbol may be mapped to each RE.

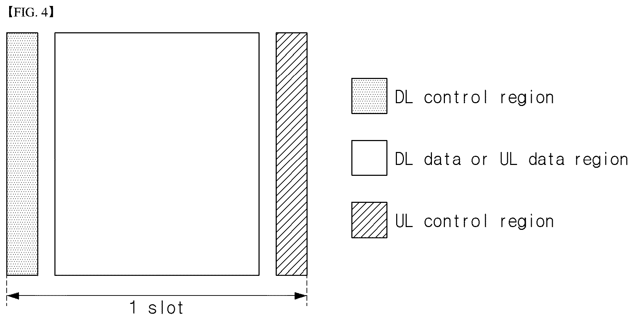

FIG. 4 illustrates an example of a slot structure of a radio frame used in a system applicable to the present disclosure.

Specifically, FIG. 4 illustrates a slot structure of a frame of the NR system as an exemplary system.

As illustrated in FIG. 4, a frame structure of NR is characterized by a self-contained structure in which all of DL control channel, DL or UL data, UL control channel, etc. can be included in one slot. In this instance, DL data scheduling information, UL data scheduling information, etc. may be transmitted on the DL control channel, and ACK/NACK information for DL data, CSI information (modulation and coding scheme information, MIMO transmission related information, etc.), scheduling request, etc. may be transmitted on the UL control channel. In FIG. 4, a time gap for DL-to-UL or UL-to-DL switching may exist between a control region and a data region. Further, a part of the DL control channel/DL data/UL data/UL control channel may not be configured within one slot. Alternatively, order of the channels constituting one slot may vary (e.g., DL control/DL data/UL control/UL data or UL control/UL data/DL control/DL data, etc.).

**Technical terms used in the present disclosure**

- UE: User Equipment
- SSB: Synchronization Signal Block
- MIB: Master Information Block
- RMSI: Remaining Minimum System Information
- FR1: Frequency domain with frequency range of 1.6 GHz or less (e.g., 450 MHz to 6,000 MHz)

- FR2: Millimeter wave (mmWave) domain with frequency range of 2.24 GHz or higher (e.g., 24,250 MHz to 52,600 MHz)
- BW: Bandwidth
- BWP: Bandwidth Part
- RNTI: Radio Network Temporary Identifier
- CRC: Cyclic Redundancy Check
- SIB: System Information Block
- SIB1: SIB1 for NR devices = RMSI (Remaining Minimum System Information). It broadcasts information, etc. necessary for cell access of an NR UE.
- CORESET (COntrol REsource SET): Time/frequency resource in which an NR UE tries candidate PDCCH decoding
- CORESET#0: CORESET for Type0-PDCCH CSS set for NR devices (configured in MIB)
- Type0-PDCCH CSS set: a search space set in which an NR UE monitors a set of PDCCH candidates for a DCI format with CRC scrambled by a SI-RNTI
- MO: PDCCH Monitoring Occasion for Type0-PDCCH CSS set
- SIB1-R: (additional) SIB1 for reduced capability NR devices. It may be limited when it is generated with a separate TB from SIB1 and is transmitted on a separate PDSCH.
- CORESET#0-R: CORESET#0 for reduced capability NR devices
- Type0-PDCCH-R CSS set: a search space set in which an redcap UE monitors a set of PDCCH candidates for a DCI format with CRC scrambled by a SI-RNTI
- MO-R: PDCCH Monitoring Occasion for Type0-PDCCH CSS set
- Cell defining SSB (CD-SSB): SSB including RMSI scheduling information among NR SSBs
- Non-cell defining SSB (non-CD-SSB): SSB that has been deployed on NR sync raster, but does not include RMSI scheduling information of a corresponding cell for measurement. But, the SSB may include information informing a location of cell defining SSB.
- SCS: Subcarrier Spacing
- SI-RNTI: System Information Radio-Network Temporary Identifier
- Camp on: "Camp on" is the UE state in which the UE stays on a cell and is ready to initiate a potential dedicated service or to receive an ongoing broadcast service.
- TB: Transport Block
- RSA (Redcap standalone): Cell supporting only redcap device or service
- SIB1(-R)-PDSCH: PDSCH transmitting SIB1(-R)
- SIB1(-R)-DCI: DCI scheduling SIB1(-R)-PDSCH. DCI format 1_0 with CRC scrambled by SI-RNTI.
- SIB1(-R)-PDCCH: PDCCH transmitting SIB1(-R)-DCI
- FDRA: Frequency Domain Resource Allocation
- TDRA: Time Domain Resource Allocation
- RA: Random Access
- MSGA: preamble and payload transmissions of the random access procedure for 2-step RA type.
- MSGB: response to MSGA in the 2-step random access procedure. MSGB may consist of response(s) for contention resolution, fallback indication(s), and backoff indication.
- RO-N: RACH Occasion (RO) for normal UE 4-step RACH and 2-step RACH (if configured)
- RO-N1, RO-N2: If separate RO is configured for normal UE 2-step RACH, it is divided into RO-N1 (4-step) and RO-N2 (2-step).
- RO-R: RACH Occasion (RO) separately configured from RO-N for redcap UE 4-step RACH and 2-step RACH (if configured)
- RO-R1, RO-R2: If separate RO is configured for redcap UE 2-step RACH, it is divided into RO-R1 (4-step) and RO-R2 (2-step).
- PG-R: MsgA-Preambles Group for redcap UEs
- RAR: Random Access Response
- RAR window: the time window to monitor RA response(s)
- FH: Frequency Hopping
- iBWP: initial BWP
- iBWP-DL(-UL): initial DL(UL) BWP
- iBWP-DL(-UL)-R: (separate) initial DL(UL) BWP for RedCap
- CS: Cyclic shift
- NB: Narrowband
- TO: Traffic Offloading
- mMTC; massive Machine Type Communications
- eMBB: enhanced Mobile Broadband Communication

- URLLC: Ultra-Reliable and Low Latency Communication
- RedCap: Reduced Capability
- eRedCap: enhanced RedCap
- FDD: Frequency Division Duplex
- HD-FDD: Half-Duplex-FDD
- DRX: Discontinuous Reception
- RRC: Radio Resource Control
- RRM: Radio Resource Management
- IWSN: Industrial Wireless Sensor Network
- LPWA: Low Power Wide Area
- RB: Resource Block
- CCE: Control Channel Element
- AL: Aggregation Level
- PRG: Physical Resource-block Group
- DFT-s-OFDM: DFT-spread OFDM
- PBCH: Physical Broadcast Channel
- A-PBCH: Additional PBCH
- BD: blind detection
- EPRE: Energy Per RE
- SNR: Signal-to-Noise Ratio
- TDM: Time Division Multiplexing
- DMRS: DeModulation Reference Signal
- TDD: Time Division Duplex
- PCI: Physical layer Cell ID

## Composition and Method of the present disclosure

In the present disclosure, '()' can be interpreted as both when excluding content in parentheses and when including content in parentheses.

In the present disclosure, '/' can be interpreted as when including all the contents separated by '/' (and), or when including only a part of the separated contents (or).

The 5G wireless communication system is characterized by effectively supporting use cases, such as mMTC, eMBB, and URLLC, compared to the previous generation wireless communication system (e.g., LTE, GSM). Due to these advantages, the 5G wireless communication system is expected to create new use cases and gradually replace the previous generation wireless communication system for various use cases. Features such as enhanced low latency, high reliability, massive connection, etc. of the 5G wireless communication system can be applied to use cases (hereinafter, NB use cases) that have been previously supported in narrowband (NB), as follows.

[Examples of narrowband based use cases (NB use cases)]

Railway mobile communication
Utility/infrastructure network
Mobile communication for public safety

These NB use cases have been previously supported at a bandwidth of about 3 MHz in a frequency band of less than 1 GHz using the previous generation wireless communication system. In the same manner, when the 5G wireless communication system intends to support the NB use cases, the NB use cases may be supported, for example, at the similar frequency bandwidth (about 3 MHz and below 5 MHz) in the same frequency band (below 1 GHz). However, since a minimum channel BW supported by the current 5G NR standard is 5 MHz, a channel bandwidth of less than 5 MHz shall first be supported.

[Example of 5G NR frequency band for NB service/use case support (TS38.101-1)]

NB services/use cases can be supported, for example, in the following NR operating frequency band defined in NR standard 3GPP TS (technical standard) 38.101-1. Table 5 shows "Table 5.2-1: NR operating bands in FR1" of 3GPP TS 38.101-1.

[Table 5]

| NR operating band | Uplink (UL) operating band BS receive/UE transmit $F_{UL\_low}$ - $F_{UL\_high}$ | Downlink (DL) operating band BS transmit/UE receive $F_{DL\_low}$ - $F_{DL\_high}$ | DuplexMode |
|---|---|---|---|
| n8 | 880 MHz - 915 MHz | 925 MHz - 960 MHz | FDD |
| n26 | 814 MHz - 849 MHz | 859 MHz - 894 MHz | FDD |
| n28 | 703 MHz - 748 MHz | 758 MHz - 803 MHz | FDD |
| n100 | 874.4 MHz - 880 MHz | 919.4 MHz - 925 MHz | FDD |

[Example of definition of channel BW of less than 5 MHz for NB service/use case support]

Table 6 shows an example of the maximum number of configurable RBs ($N_{RB}$) for each channel BW. Specifically, Table 6 shows an example of defining 3 MHz channel BW and the maximum number of configurable RBs ($N_{RB}$) 15 for the 3 MHz channel BW in order to support the NB services/use cases based on 5G NR, and representing a resource utilization ratio (or RU). The RU can be defined as in Equation 1 below.

【Equation 1】

$$RU = (N_{RB} \text{ in MHz}) / (\text{channel BW in MHz})$$

Table 6 below shows a support example 1 for channel BW of less than 5 MHz.

[Table 6]

| Channel BW | 3 MHz | 5 MHz | 10 MHz | 15 MHz | 20 MHz | 25 MHz | 30 MHz | 40 MHz | 50 MHz |
|---|---|---|---|---|---|---|---|---|---|
| $N_{RB}$ | 15 | 25 | 52 | 79 | 106 | 133 | 160 | 216 | 270 |
| RU | 0.9 | 0.9 | 0.936 | 0.948 | 0.954 | 0.958 | 0.96 | 0.972 | 0.972 |

Alternatively, for newly defined 3 MHz channel BW, considering interference between contiguous channels and the resource utilization ratio, one of $N_{RB}$ values shown in Table 7 below may be defined and used. Alternatively, multiple values of $N_{RB}$ values shown in Table 7 below are supported in the NR standard and may be supported by BS configuration.
Table 7 below shows a support example 2 for channel BW of less than 5 MHz.

[Table 7]

| SCS (kHz) | 3 MHz | | | | |
|---|---|---|---|---|---|
| | $N_{RB}$ | $N_{RB}$ | $N_{RB}$ | $N_{RB}$ | $N_{RB}$ |
| 15 | 12 | 13 | 14 | 15 | 16 |
| RU (%) | 0.72 | 0.78 | 0.84 | 0.9 | 0.96 |

In this instance, the channel BW/$N_{RB}$ may apply the same value for both DL and UL, or channel BW/$N_{RB}$ may be configured/supported separately/independently for DL and UL. The latter case may be a method of selecting when intending to apply conditions where additional DFT precoding is applicable only to the UL when determining the $N_{RB}$ values, while supporting maximum channel BW/$N_{RB}$ values in both DL and UL, for example, considering interference between contiguous channels and the resource utilization ratio.

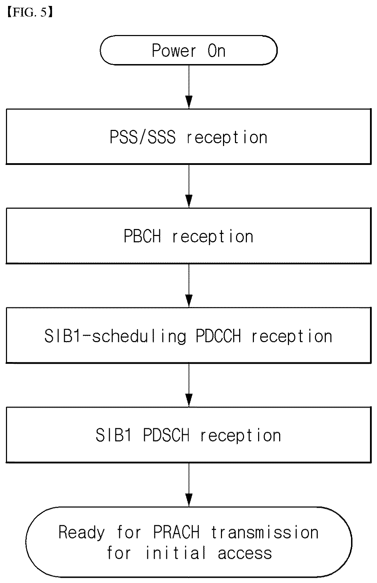

FIG. 5 illustrates an example of a process for a UE to receive DL signals/channels in an initial access procedure in a system applicable to the present disclosure.
Referring to FIG. 5, in an initial access procedure, a UE may receive DL signals/channels in order of (1) power-On, (2) PSS/SSS reception, (3) PBCH reception, (4) SIB1-scheduling PDCCH reception, (5) SIB1 PDSCH reception, and (6) ready for PRACH transmission for initial access.
The initial access procedure was described above in detail. The existing NR UE may receive CORESET#0 information through an MIB transmitted on a PBCH and receive initial DL signals/channels through CORESET#0 frequency band in an initial access procedure. However, when the NR UE operates in a narrowband, the existing method may be inefficient considering the channel BWs shown in Tables 6 and 7 and supportable CORESET#0 bandwidth in the NR standard.

The present disclosure proposes the following methods for supporting transmission/reception of a DL broadcast signal/channel for an initial access in a narrowband.

In the present disclosure, narrowband and NB can be interpreted/applied interchangeably. Further, channel BW, $N_{RB}$, and maximum transmission BW can be interpreted/applied interchangeably.

In the present disclosure, broadcast signaling includes a signaling method using system information including SIB1, MIB, PBCH payload generated in the PHY layer in addition to the MIB, and PBCH scrambling sequence and PBCH DMRS sequence initialization information.

## Method of transmitting and receiving PBCH

In order to support NR DL broadcast signal reception in a narrowband with 5 MHz bandwidth (bandwidth of less than 5 MHz), a partial subset of PBCH transmission RBs may be transmitted.

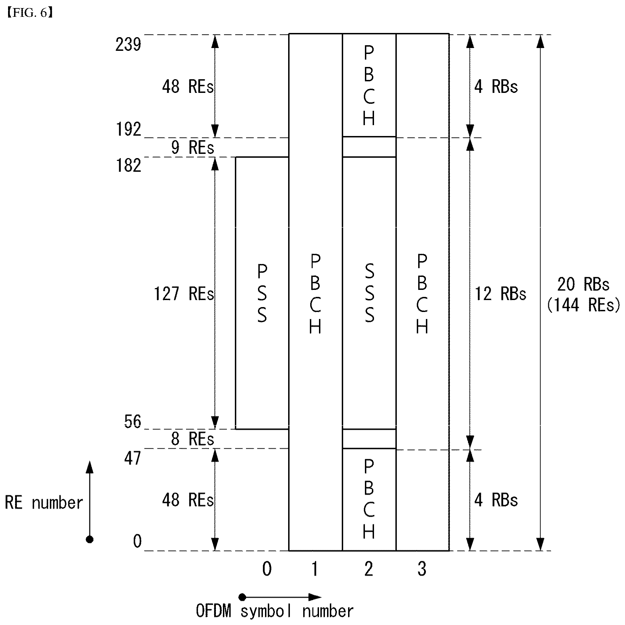

FIG. 6 illustrates an example of a time/frequency structure of a synchronization signal block (SSB) in a system applicable to the present disclosure.

For example, a base station may need to exclude at least four PBCH transmission RBs from PBCH consisting of 20 PRBs and transmit remaining RBs, in order to support PBCH transmission/reception in 3 MHz channel BW stipulated as $N_{RB}$ = 16 PRBs. That is, the base station may transmit a subset of up to 16 PBCH transmission RBs among a total of 20 PBCH transmission RBs. In this instance, all PSS/SSS transmission RBs can be received for the same level of synchronization and measurement performance as the existing NR UE.

The BS/UE may determine the RB subset for PBCH transmission at 3 MHz channel BW stipulated as $N_{RB}$ = 16 PRBs, as follows.

Method #P1-1: determining as center 12 PRBs (for PSS/SSS) and lower 4 PRBs
Method #P1-2: determining as center 12 PRBs (for PSS/SSS) and higher 4 PRBs
Method #P1-3: determining as center 12 PRBs (for PSS/SSS) and lower 3 PRBs + higher 1 PRB
Method #P1-4: determining as center 12 PRBs (for PSS/SSS) and higher 3 PRBs + lower 1 PRB
Method #P1-5: determining as center 12 PRBs (for PSS/SSS) and higher 2 PRBs + lower 2 PRBs (symmetric puncturing)

It may be classified that the methods #P1-1 to P1-4 are asymmetric transmission/puncturing method, and the method #P1-5 is symmetric transmission/puncturing method.

Due to characteristics of PBCH RE mapping, preferentially transmitting lower PRBs of PBCH transmission PRBs may be slightly advantageous in terms of performance. Therefore, if other conditions are the same, supporting the method #P1-1/P1-3 rather than the method #P1-2/P1-4 may have an advantage in terms of PBCH reception performance. The methods #P1-1 and P1-2 may not be preferred in a situation, in which there is interference from a contiguous channel/frequency band, because the PSS/SSS is exposed to a band edge. The method #P1-3 may be a method of trading off PBCH reception performance and an impact of interference. The arrangement of the higher 1 PRB in the method #P1-3 and the lower 1 PRB in the method #P1-4 may be intended to protect the SSS from the interference from the contiguous channel/frequency band.

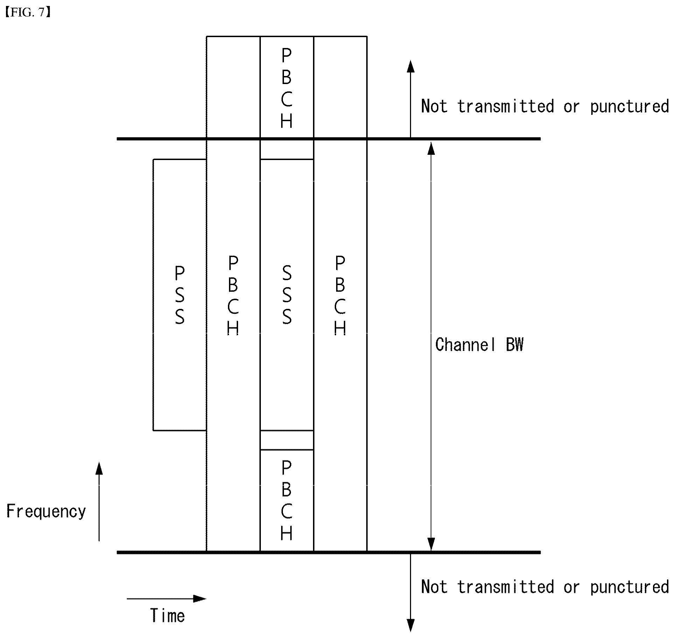

FIG. 7 illustrates an example of RB subset configuration for PBCH transmission in a system applicable to the present disclosure.

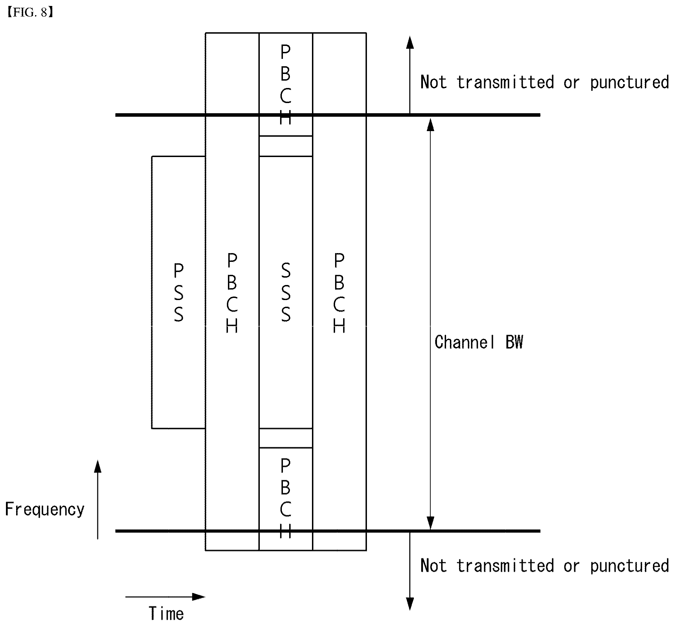

FIG. 8 illustrates an example of RB subset configuration for PBCH transmission in a system applicable to the present disclosure.

Specifically, FIG. 7 illustrates an example of the above-described method #P1-1, and FIG. 8 illustrates an example of the above-described method #P1-3.

The BS/UE may determine the RB subset for PBCH transmission at 3 MHz channel BW stipulated as $N_{RB}$ = 15 PRBs, as follows.

Method #P2-1: determining as center 12 PRBs (for PSS/SSS) and lower 3 PRBs
Method #P2-2: determining as center 12 PRBs (for PSS/SSS) and higher 3 PRBs
Method #P2-3: determining as center 12 PRBs (for PSS/SSS) and lower 2 PRBs + higher 1 PRB
Method #P2-4: determining as center 12 PRB (for PSS/SSS) and higher 2 PRBs + lower 1 PRB

In the same manner as $N_{RB}$ = 16 PRBs, due to characteristics of PBCH RE mapping, preferentially transmitting lower PRBs of PBCH transmission PRBs may be slightly advantageous in terms of performance. Therefore, if other conditions are the same, supporting the method #P2-1/P2-3 rather than the method #P2-2/P2-4 may have an advantage in terms of PBCH reception performance. The methods #P2-1 and P2-2 may not be preferred in a situation, in which there is interference from a contiguous channel/frequency band, because the PSS/SSS is exposed to a band edge. The method #P2-3 may be a method of trading off PBCH reception performance and an impact of interference. The arrangement of the higher 1 PRB in the method #P2-3 and the lower 1 PRB in the method #P2-4 may be intended to protect the SSS from the interference from the contiguous channel/frequency band.

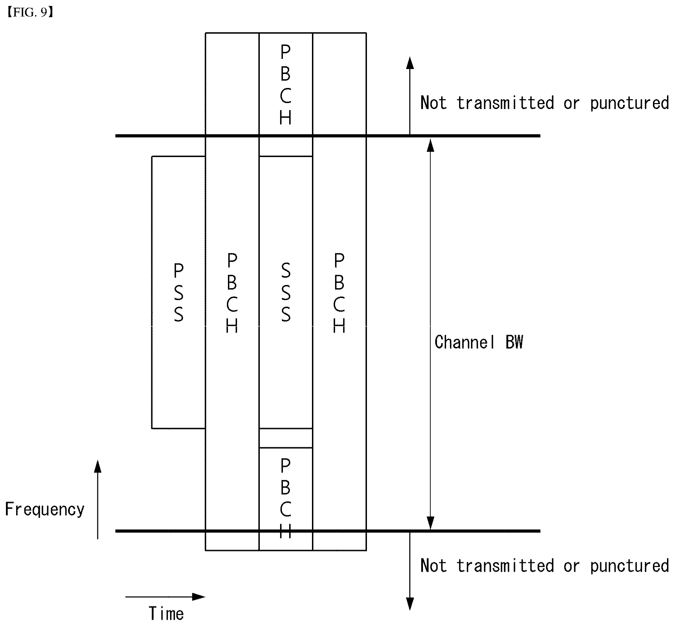

FIG. 9 illustrates an example of RB subset configuration for PBCH transmission in a system applicable to the present disclosure.

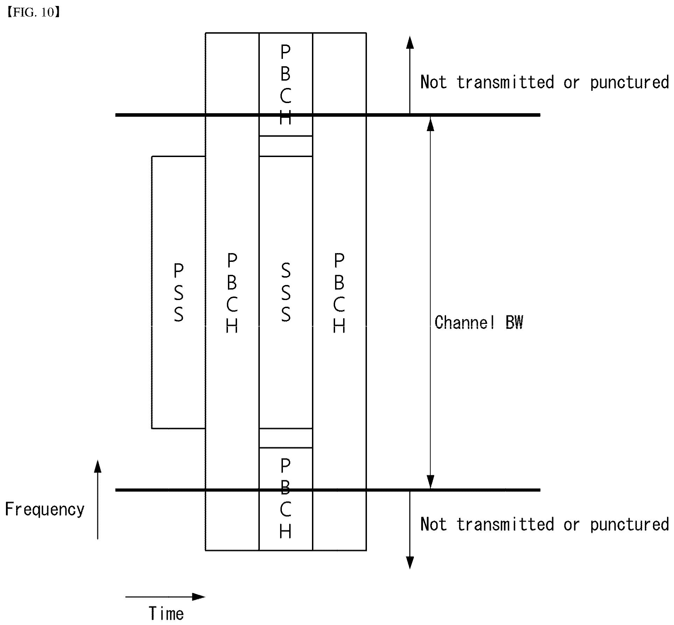

FIG. 10 illustrates an example of RB subset configuration for PBCH transmission in a system applicable to the present disclosure.

Specifically, FIG. 9 illustrates an example of the above-described method #P2-1, and FIG. 10 illustrates an example of the above-described method #P2-3.

If the maximum transmission BW defined in the narrowband is $N_{RB}$, the method #P2-3 and the method #P2-4 may be determined by the following Equations.

Method #P2-3: Center 12 PRB, lower ceil[$(N_{RB}-12)/2$] PRB, upper floor[$(N_{RB}-12)/2$] PRB
Method #P2-4: Center 12 PRB, lower floor[$(N_{RB}-12)/2$] PRB, upper ceil[$(N_{RB}-12)/2$] PRB.

The methods of determining the RB subset for the PBCH transmission may be applied in all the narrowband frequency bands in a fixed manner, or may be predefined per narrowband frequency band (in the form of Table), or may be determined by the base station and configured/displayed to the UE by broadcast signaling.

**Method of transmitting and receiving PDCCH**

In order to receive SIB1-PDCCH in the narrowband, the UE may receive CORESET#0 and Type0-PDCCH CSS set information through MIB transmitted on PBCH. Since CORESET#0 bandwidth supported in the current NR standard is 24 PRB (4.32 MHz) based on 15 kHz SCS, it may exceed the narrowband channel BWs shown in Tables 6 and 7. In this instance, the base station may RE-map PDCCH transmission REs to CORESET #0 and then transmit them only to REs falling within the channel BW. That is, the base station may transmit only the PDCCH transmission REs falling within the channel BW by puncturing the PDCCH transmission REs exceeding the channel BW.

When the PDCCH transmission RE cannot be transmitted to the entire CORESET#0 BW for narrowband transmission/reception, the actual transmitted/received PDCCH REs may be determined in units of RE in the frequency domain or may be determined in units of PRB, in units of REG, in units of CCE, etc. When the PDCCH REs are determined in units of CCE, the actual PDCCH transmission/reception RE may be determined in units of 2 PRB in the case of 3-symbol CORESET#0. Alternatively, in the case of 2-symbol CORESET#0, the actual PDCCH transmission/reception RE may be determined in units of 3 PRB.

The UE may assume the above BS operation (i.e., the puncturing operation) and receive the PDCCH transmission REs within the channel BW. That is, the BS/UE may assume that all the PDCCH transmission REs RE-mapped to the CORESET#0 bandwidth are not transmitted/received based on the NR standard, and only the PDCCH transmission REs falling within the channel BW among the PDCCH transmission REs are actually transmitted/received, and may transmit/receive them.

Alternatively, the UE may assume the above BS operation (i.e., the puncturing operation) and receive the PDCCH transmission REs within a PBCH BW. That is, the BS/UE may assume that all the PDCCH transmission REs RE-mapped to the CORESET#0 bandwidth are not transmitted/received based on the NR standard, and only the PDCCH transmission REs falling within the PBCH BW among the PDCCH transmission REs are actually transmitted/received, and may transmit/receive them. In this instance, the PBCH BW that the UE expects the PDCCH transmission/reception may be the PBCH BW "used for actual PBCH transmission." That is, if some of PBCH transmission REs are punctured and transmitted, the UE may assume the PBCH BW "used for actual PBCH transmission after puncturing" or the "punctured" PBCH BW in the same meaning as an initial DL BWP.

Further, in this case, when the CORESET#0 BW exceeds the channel BW, the UE may assume the PBCH BW as the initial DL BWP in the initial access procedure. In this instance, the PBCH BW that the UE assumes as the initial DL BWP may be the PBCH BW "used for actual PBCH transmission." That is, if some of the PBCH transmission REs are punctured and transmitted, the UE may assume the PBCH BW "used for actual PBCH transmission after puncturing" or the "punctured" PBCH BW in the same meaning the initial DL BWP. A reason for newly defining the initial DL BWP in narrowband in this way may be to eliminate elements that may cause UE complexity issues, such as the puncturing within the initial DL BWP and the partial reception, or adversely affect the reception coverage.

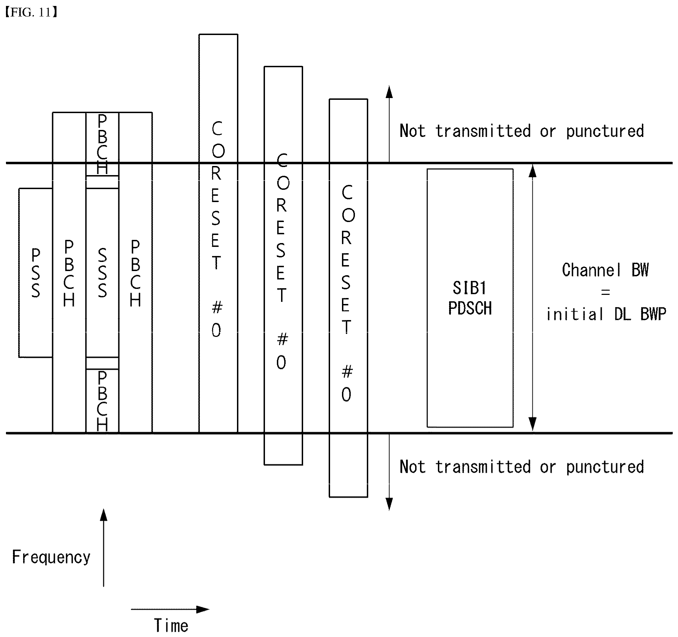

FIG. 11 illustrates an example of PDCCH transmission/reception frequency domain in a system applicable to the present disclosure.

Specifically, FIG. 11 illustrates, in narrowband in which $N_{RB}$ = 16 PRBs and CORESET#0 BW = 24 PRBs, a frequency domain, that the UE expects the PDCCH reception among the CORESET#0 BW, and an initial DL BWP when the method #P1-1 is applied to determine a subset of the PBCH transmission REs and transmit the PBCH. In addition, FIG. 11 illustrates three types of CORESETs #0 with a size of 24 PRBs among CORESETs #0 that a BS can configure/display based on the current NR standard 3GPP TS 38.213 Table 13-1. As illustrated in FIG. 11, the three types of CORESETs #0 have different RB offset values (following the definition of TS 38.213 Table 13-1), but they are all expected to transmit/receive similar amount of PDCCH transmission REs at a maximum transmission BW or a PBCH BW. Therefore, there may not be much difference in performance between the three types of CORESETs #0, and they can be all supported.

According to 3GPP TS 38.213 standard, relative locations of SSB and CORESET#0 are determined as shown in Table 8 below.

[Table 8]

| For operation with shared spectrum channel access in FR2-2 and for operation without shared spectrum channel access, a UE assumes that the offset in Tables 13-1 through 13-10A is defined with respect to the SCS of the CORESET for Type0-PDCCH CSS set from the smallest RB index of the CORESET for Type0-PDCCH CSS set to the smallest RB index of the common RB overlapping with the first RB of the corresponding SS/PBCH block. The SCS of the CORESET for Type0-PDCCH CSS set is provided by *subCarrierSpacingCommon* for FR1 and FR2-1 and same as the SCS of the corresponding SS/PBCH block for FR2-2. In Tables 13-7, 13-8, and 13-10, $k_{SSB}$ is defined in [4, TS 38.211]. |
| --- |

Even if PBCH and PDCCH are transmitted in the narrowband using the methods proposed in the present disclosure, a relative location relation between SSB and CORESET#0 and a signaling method for this may follow the existing standard. That is, "the smallest RB index of the CORESET for Type0-PDCCH CSS set" and "the first RB of the corresponding SS/PBCH block" described in the above standard may be based on the entire PBCH BW (before puncturing) and the entire CORESET#0 BW (before puncturing) even if actual transmission/reception is not performed due to subset transmission, puncturing, etc. for narrowband transmission.

Alternatively, "the first RB of the corresponding SS/PBCH block" described in the above standard may be indicated based on actual transmitted/received PBCH transmission RBs (after determining puncturing or subset) when subset transmission, puncturing, etc. for narrowband transmission is performed. In this case, a new RB offset value needs to be defined.

### [Description of UE related claims]

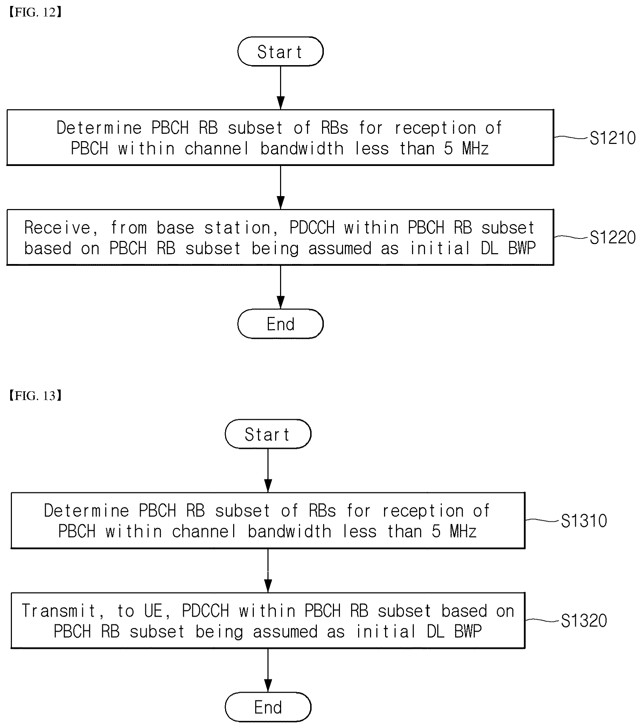

Below, the above-described embodiments are described in detail from a perspective of an operation of a UE with reference to FIG. 12. Methods to be described below are merely distinguished for convenience of explanation. Thus, as long as the methods are not mutually exclusive, it is obvious that partial configuration of any method can be substituted or combined with partial configuration of another method.

FIG. 12 illustrates an example of an operation process of a UE in a system applicable to the present disclosure.

In step S1210, a user equipment (UE) determines a physical broadcast channel (PBCH) resource block (RB) subset of resource blocks (RBs) for a reception of a PBCH within a channel bandwidth less than 5 MHz.

The PBCH RB subset includes first RBs for a primary synchronization signal (PSS) and a secondary synchronization signal (SSS).

In step S1220, the UE receives, from a base station (BS), a physical downlink control channel (PDCCH) within the PBCH RB subset based on the PBCH RB subset being assumed as an initial downlink (DL) bandwidth part (BWP).

According to various embodiments of the present disclosure, the PBCH RB subset may be configured such that the same number of RBs at both sides of the channel bandwidth are symmetrically punctured.

According to various embodiments of the present disclosure, the embodiment illustrated in FIG. 12 may further comprise a step of receiving configuration information for the PBCH RB subset from the BS.

According to various embodiments of the present disclosure, the PBCH RB subset may be determined based on the configuration information.

According to various embodiments of the present disclosure, the embodiment illustrated in FIG. 12 may further comprise a step of receiving the PBCH from the BS based on the PBCH RB subset.

According to various embodiments of the present disclosure, the PBCH RB subset may further include a specific number of second RBs higher or lower than the first RBs, and the second RBs may include four RBs lower than the first RBs.

According to various embodiments of the present disclosure, the PBCH RB subset may further include a specific number of second RBs higher or lower than the first RBs, and the second RBs may include two RBs lower than the first RBs and two RBs higher than the first RBs.

According to various embodiments of the present disclosure, the PBCH RB subset may further include a specific number of second RBs higher or lower than the first RBs, and the second RBs may include two RBs lower than the first RBs and one RB higher than the first RBs.

According to various embodiments of the present disclosure, there is provided a user equipment (UE) in a wireless communication system. The UE may include a transceiver and at least one processor, and the at least one processor may be configured to perform the operation method of the UE based on FIG. 12.

According to various embodiments of the present disclosure, there is provided a device controlling a user equipment (UE) in a wireless communication system. The device may include at least one processor and at least one memory operably connected to the at least one processor. The at least one memory may be configured to store instructions performing the operation method of the UE based on FIG. 12 based on being executed by the at least one processor.

According to various embodiments of the present disclosure, there are provided one or more non-transitory computer readable mediums storing one or more instructions. The one or more instructions may be configured to perform operations based on being executed by one or more processors, and the operations may include the operation method of the UE based on FIG. 12.

### [Description of BS related claims]

Below, the above-described embodiments are described in detail from a perspective of an operation of a base station with reference to FIG. 13. Methods to be described below are merely distinguished for convenience of explanation. Thus, as long as the methods are not mutually exclusive, it is obvious that partial configuration of any method can be substituted or combined with partial configuration of another method.

FIG. 13 illustrates an example of an operation process of a base station in a system applicable to the present disclosure.

In step S1310, a base station (BS) determines a physical broadcast channel (PBCH) resource block (RB) subset of resource blocks (RBs) for a reception of a PBCH within a channel bandwidth less than 5 MHz.

The PBCH RB subset includes first RBs for a primary synchronization signal (PSS) and a secondary synchronization signal (SSS).

In step S1320, the base station transmits, to a user equipment (UE), a physical downlink control channel (PDCCH) within the PBCH RB subset based on the PBCH RB subset being assumed as an initial downlink (DL) bandwidth part (BWP).

According to various embodiments of the present disclosure, the PBCH RB subset may be configured such that the same number of RBs at both sides of the channel bandwidth are symmetrically punctured.

According to various embodiments of the present disclosure, the embodiment illustrated in FIG. 13 may further comprise a step of transmitting configuration information for the PBCH RB subset to the UE.

According to various embodiments of the present disclosure, the PBCH RB subset may be determined based on the configuration information.

According to various embodiments of the present disclosure, the embodiment illustrated in FIG. 13 may further comprise a step of transmitting the PBCH to the UE based on the PBCH RB subset.

According to various embodiments of the present disclosure, the PBCH RB subset may further include a specific number of second RBs higher or lower than the first RBs, and the second RBs may include four RBs lower than the first RBs.

According to various embodiments of the present disclosure, the PBCH RB subset may further include a specific number of second RBs higher or lower than the first RBs, and the second RBs may include two RBs lower than the first RBs and two RBs higher than the first RBs.

According to various embodiments of the present disclosure, the PBCH RB subset may further include a specific number of second RBs higher or lower than the first RBs, and the second RBs may include two RBs lower than the first RBs and one RB higher than the first RBs.

According to various embodiments of the present disclosure, there is provided a base station in a wireless communication system. The base station may include a transceiver and at least one processor, and the at least one processor may be configured to perform the operation method of the BS based on FIG. 13.

According to various embodiments of the present disclosure, there is provided a device controlling a base station in a wireless communication system. The device may include at least one processor and at least one memory operably connected to the at least one processor. The at least one memory may be configured to store instructions performing the operation method of the BS based on FIG. 13 based on being executed by the at least one processor.

According to various embodiments of the present disclosure, there are provided one or more non-transitory computer readable mediums storing one or more instructions. The one or more instructions may be configured to perform operations based on being executed by one or more processors, and the operations may include the operation method of the BS based on FIG. 13.

**Wireless devices applicable to the present disclosure**

Examples of wireless devices to which various embodiments of the present disclosure are applied are described below.

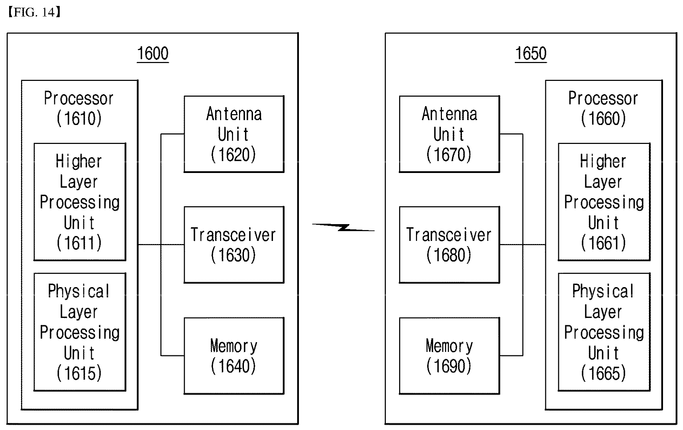

FIG. 14 illustrates an example of a structure of a first device and a second device in a system applicable to the present disclosure.
A first device 1600 may include a processor 1610, an antenna unit 1620, a transceiver 1630, and a memory 1640.
The processor 1610 may perform baseband-related signal processing and include a higher layer processing unit 1611 and a physical layer processing unit 1615. The higher layer processing unit 1611 may process operations of the MAC layer, the RRC layer, or higher layers. The physical layer processing unit 1615 may process the operation of the PHY layer. For example, if the first device 1600 is a base station (BS) device in BS-UE communication, the physical layer processing unit 1615 may perform uplink reception signal processing, downlink transmission signal processing, and the like. For example, if the first device 1600 is a first UE device in inter-UE communication, the physical layer processing unit 1615 may performs downlink reception signal processing, uplink transmission signal processing, sidelink transmission signal processing, and the like. The processor 1610 may control the overall operation of the first device 1600 in addition to performing the baseband-related signal processing.
The antenna unit 1620 may include one or more physical antennas and support MIMO transmission/reception if the antenna unit 1620 includes a plurality of antennas. The transceiver 1630 may include a radio frequency (RF) transmitter and an RF receiver. The memory 1640 may store information processed by the processor 1610 and software, operating systems, and applications related to the operation of the first device 1600. The memory 1640 may also include components such as a buffer.
The processor 1610 of the first device 1600 may be configured to implement the operation of the BS in the BS-UE communication (or the operation of the first UE device in the inter-UE communication) in embodiments described in the present disclosure.
The second device 1650 may include a processor 1660, an antenna unit 1670, a transceiver 1680, and a memory 1690.
The processor 1660 may perform baseband-related signal processing and include a higher layer processing unit 1661 and a physical layer processing unit 1665. The higher layer processing unit 1661 may process the operation of the MAC layer, the RRC layer, or higher layers. The physical layer processing unit 1665 may process the operation of the PHY layer. For example, if the second device 1650 is a UE device in BS-UE communication, the physical layer processing unit 1665 may perform downlink reception signal processing, uplink transmission signal processing, and the like. For example, if the second device 1650 is a second UE device in inter-UE communication, the physical layer processing unit 1665 may perform downlink reception signal processing, uplink transmission signal processing, sidelink reception signal processing, and the like. The processor 1660 may control the overall operation of the second device 1660 in addition to performing the baseband-related signal processing.
The antenna unit 1670 may include one or more physical antennas and support MIMO transmission/reception if the antenna unit 1670 includes a plurality of antennas. The transceiver 1680 may include an RF transmitter and an RF receiver. The memory 1690 may store information processed by the processor 1660 and software, operating systems, and applications related to the operation of the second device 1650. The memory 1690 may also include components such as a buffer.
The processor 1660 of the second device 1650 may be configured to implement the operation of the UE in the BS-UE communication (or the operation of the second UE device in the inter-UE communication) in embodiments described in the present disclosure.
The descriptions for the BS and the UE in the BS-UE communication (or the first UE device and the second UE device in the inter-UE communication) in the examples of the present disclosure can be equally applied to the operations of the first device 1600 and the second device 1650, and redundant descriptions are omitted.
The wireless communication technology implemented in the devices 1600 and 1650 according to the present disclosure can include various wireless communication technologies in addition to LTE, NR, and 6G.
The claims described in various embodiments of the present disclosure can be combined in various ways. For example, technical features of the method claims of various embodiments of the present disclosure can be combined and implemented as a device, and technical features of the device claims of various embodiments of the present disclosure can be combined and implemented as a method. In addition, the technical features of the method claims and the technical features of the device claims in various embodiments of the present disclosure can be combined and implemented as a device, and the technical features of the method claims and the technical features of the device claims in various embodiments of the present disclosure can be combined and implemented as a method.

**Claims**

1. A method of operating a user equipment (UE) in a wireless communication system, the method comprising:

   determining a physical broadcast channel (PBCH) resource block (RB) subset of RBs for a reception of a PBCH within a channel bandwidth less than 5 MHz, the PBCH RB subset including first RBs for a primary synchronization signal (PSS) and a secondary synchronization signal (SSS); and
   receiving, from a base station (BS), a physical downlink control channel (PDCCH) within the PBCH RB subset based on the PBCH RB subset being assumed as an initial downlink (DL) bandwidth part (BWP).

2. The method of claim 1, wherein the PBCH RB subset is configured such that the same number of RBs at both sides of the channel bandwidth are symmetrically punctured.

3. The method of claim 1, further comprising:

   receiving configuration information for the PBCH RB subset from the BS,
   wherein the PBCH RB subset is determined based on the configuration information.

4. The method of claim 1, further comprising:
   receiving the PBCH from the BS based on the PBCH RB subset.

5. The method of claim 1, wherein the PBCH RB subset further includes a specific number of second RBs higher or lower than the first RBs, and
   wherein the second RBs include four RBs lower than the first RBs.

6. The method of claim 1, wherein the PBCH RB subset further includes a specific number of second RBs higher or lower than the first RBs, and
   wherein the second RBs include two RBs lower than the first RBs and two RBs higher than the first RBs.

7. The method of claim 1, wherein the PBCH RB subset further includes a specific number of second RBs higher or lower than the first RBs, and
   wherein the second RBs include two RBs lower than the first RBs and one RB higher than the first RBs.

8. A method of operating a base station (BS) in a wireless communication system, the method comprising:

   determining a physical broadcast channel (PBCH) resource block (RB) subset of RBs for a reception of a PBCH within a channel bandwidth less than 5 MHz, the PBCH RB subset including first RBs for a primary synchronization signal (PSS) and a secondary synchronization signal (SSS); and
   transmitting, to a user equipment (UE), a physical downlink control channel (PDCCH) within the PBCH RB subset based on the PBCH RB subset being assumed as an initial downlink (DL) bandwidth part (BWP).

9. The method of claim 8, wherein the PBCH RB subset is configured such that the same number of RBs at both sides of the channel bandwidth are symmetrically punctured.

10. The method of claim 8, further comprising:

    transmitting configuration information for the PBCH RB subset to the UE,
    wherein the PBCH RB subset is determined based on the configuration information.

11. The method of claim 8, further comprising:
    transmitting the PBCH to the UE based on the PBCH RB subset.

12. The method of claim 8, wherein the PBCH RB subset further includes a specific number of second RBs higher or lower than the first RBs, and
    wherein the second RBs include four RBs lower than the first RBs.

13. The method of claim 8, wherein the PBCH RB subset further includes a specific number of second RBs higher or lower than the first RBs, and

wherein the second RBs include two RBs lower than the first RBs and two RBs higher than the first RBs.

14. The method of claim 8, wherein the PBCH RB subset further includes a specific number of second RBs higher or lower than the first RBs, and
wherein the second RBs include two RBs lower than the first RBs and one RB higher than the first RBs.

15. A user equipment (UE) in a wireless communication system, the UE comprising:

a transceiver;
at least one processor; and
at least one memory operably connectable to the at least one processor,
wherein the at least one memory is configured to store instructions performing operations based on being executed by the at least one processor, and
wherein the operations comprise all steps of a method according to any one of claims 1 to 7.

16. A base station (BS) in a wireless communication system, the BS comprising:

a transceiver;
at least one processor; and
at least one memory operably connectable to the at least one processor,
wherein the at least one memory is configured to store instructions performing operations based on being executed by the at least one processor, and
wherein the operations comprise all steps of a method according to any one of claims 8 to 14.

17. A control device controlling a user equipment (UE) in a wireless communication system, the control device comprising:

at least one processor; and
at least one memory operably connectable to the at least one processor,
wherein the at least one memory is configured to store instructions performing operations based on being executed by the at least one processor, and
wherein the operations comprise all steps of a method according to any one of claims 1 to 7.

18. A control device controlling a base station in a wireless communication system, the control device comprising:

at least one processor; and
at least one memory operably connectable to the at least one processor,
wherein the at least one memory is configured to store instructions performing operations based on being executed by the at least one processor, and
wherein the operations comprise all steps of a method according to any one of claims 8 to 14.

19. One or more non-transitory computer readable mediums storing one or more instructions,

wherein the one or more instructions are configured to perform operations based on being executed by one or more processors, and
wherein the operations comprise all steps of a method according to any one of claims 1 to 7.

20. One or more non-transitory computer readable mediums storing one or more instructions,

wherein the one or more instructions are configured to perform operations based on being executed by one or more processors, and
wherein the operations comprise all steps of a method according to any one of claims 8 to 14.

[FIG. 1]

【FIG. 2】

【FIG. 3】

【FIG. 4】

1 slot

DL control region

DL data or UL data region

UL control region

【FIG. 5】

```
           ╭─────────────────────╮
           │      Power  On      │
           ╰─────────────────────╯
                      │
                      ▼
    ┌─────────────────────────────────┐
    │        PSS/SSS  reception        │
    └─────────────────────────────────┘
                      │
                      ▼
    ┌─────────────────────────────────┐
    │         PBCH  reception          │
    └─────────────────────────────────┘
                      │
                      ▼
    ┌─────────────────────────────────┐
    │  SIB1-scheduling  PDCCH  reception │
    └─────────────────────────────────┘
                      │
                      ▼
    ┌─────────────────────────────────┐
    │       SIB1  PDSCH  reception     │
    └─────────────────────────────────┘
                      │
                      ▼
       ╭──────────────────────────────╮
       │ Ready for PRACH transmission  │
       │      for initial access       │
       ╰──────────────────────────────╯
```

[FIG. 6]

【FIG. 7】

Not transmitted or punctured

Channel BW

Not transmitted or punctured

Frequency

Time

【FIG. 8】

【FIG. 9】

【FIG. 10】

Not transmitted or punctured

Channel BW

Not transmitted or punctured

Frequency

Time

26

[FIG. 11]

【FIG. 12】

```
            ( Start )
                |
                v
+-------------------------------------------+
| Determine PBCH RB subset of RBs for       |
| reception of PBCH within channel          |~~ S1210
| bandwidth less than 5 MHz                 |
+-------------------------------------------+
                |
                v
+-------------------------------------------+
| Receive, from base station, PDCCH within  |
| PBCH RB subset based on PBCH RB subset     |~~ S1220
| being assumed as initial DL BWP           |
+-------------------------------------------+
                |
                v
             ( End )
```

【FIG. 13】

```
            ( Start )
                |
                v
+-------------------------------------------+
| Determine PBCH RB subset of RBs for       |
| reception of PBCH within channel          |~~ S1310
| bandwidth less than 5 MHz                 |
+-------------------------------------------+
                |
                v
+-------------------------------------------+
| Transmit, to UE, PDCCH within PBCH RB      |
| subset based on PBCH RB subset being       |~~ S1320
| assumed as initial DL BWP                 |
+-------------------------------------------+
                |
                v
             ( End )
```

【FIG. 14】

## INTERNATIONAL SEARCH REPORT

| International application No. |
|---|
| **PCT/KR2024/095332** |

**A.    CLASSIFICATION OF SUBJECT MATTER**

**H04W 48/12**(2009.01)i; **H04W 56/00**(2009.01)i; **H04W 48/10**(2009.01)i; **H04W 72/04**(2009.01)i

According to International Patent Classification (IPC) or to both national classification and IPC

**B.    FIELDS SEARCHED**

Minimum documentation searched (classification system followed by classification symbols)

H04W 48/12(2009.01); H04L 47/00(2022.01); H04L 9/40(2022.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: narrowband, SSB, PBCH, PSS, SSS, RB subset, initial DL BWP, PDCCH, CORESET

**C.    DOCUMENTS CONSIDERED TO BE RELEVANT**

| Category* | Citation of document, with indication, where appropriate, of the relevant passages | Relevant to claim No. |
|---|---|---|
| X<br>Y<br>A | ZTE. Discussion on dedicated spectrum less than 5MHz for FR1. R1-2211050, 3GPP TSG RAN WG1 #111. Toulouse, France. 07 November 2022.<br>    See sections 2.2.1-4; and figures 3-4. | 1-2,8-9,15-20<br>3-4,10-11<br>5-7,12-14 |
| Y | SPREADTRUM COMMUNICATIONS. Discussion on enhancements to operate NR on dedicated spectrum. R1-2211547, 3GPP TSG RAN WG1 #111. Toulouse, France. 07 November 2022.<br>    See section 2.1. | 3-4,10-11 |
| A | HUAWEI et al. Discussion on dedicated spectrum less than 5 MHz for FR1. R1-2210869, 3GPP TSG-RAN WG1 Meeting #111. Toulouse, France. 07 November 2022.<br>    See section 2. | 1-20 |
| A | VIVO. Discussion on NR support for dedicated spectrum less than 5MHz. R1-2211036, 3GPP TSG RAN WG1 #111. Toulouse, France. 07 November 2022.<br>    See section 2. | 1-20 |

[✓] Further documents are listed in the continuation of Box C.    [✓] See patent family annex.

| | |
|---|---|
| *    Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **05 June 2024** | **05 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2024/095332** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2018-0059502 A (QUALCOMM INCORPORATED) 04 June 2018 (2018-06-04) See paragraphs [0165]-[0176]; and figures 16-21. | 1-20 |

Form PCT/ISA/210 (second sheet) (July 2022)

INTERNATIONAL SEARCH REPORT
Information on patent family members

International application No.

**PCT/KR2024/095332**

| Patent document cited in search report | | | Publication date (day/month/year) | Patent family member(s) | | | Publication date (day/month/year) |
|---|---|---|---|---|---|---|---|
| KR | 10-2018-0059502 | A | 04 June 2018 | CN | 108141331 | A | 08 June 2018 |
| | | | | CN | 108141331 | B | 01 June 2021 |
| | | | | EP | 3353938 | A1 | 01 August 2018 |
| | | | | EP | 3353938 | B1 | 22 November 2023 |
| | | | | JP | 2018-534822 | A | 22 November 2018 |
| | | | | JP | 7077220 | B2 | 30 May 2022 |
| | | | | KR | 10-2616072 | B1 | 19 December 2023 |
| | | | | US | 11212760 | B2 | 28 December 2021 |
| | | | | US | 2017-0094621 | A1 | 30 March 2017 |
| | | | | WO | 2017-053024 | A1 | 30 March 2017 |

Form PCT/ISA/210 (patent family annex) (July 2022)